# EUROPÄISCHE PATENTANMELDUNG

(11) **EP 0 980 000 A1**
(43) Veröffentlichungstag der Anmeldung: **16.02.2000**
(21) Anmeldenummer: 99115385.9
(22) Anmeldetag: 04.08.1999
(51) Int. Cl.: G01P 3/48, G01P 13/04, H02K 29/08, H02P 6/16

(54) **Vorrichtung zur Erfassung der Drehstellung, Drehzahl und/oder Drehrichtung des Rotors eines Elektromotors**

(30) Priorität: 05.08.1998 DE 19835377
(71) Anmelder: AKO-Werke GmbH & Co. KG, 88239 Wangen/Allgäu (DE)
(72) Erfinder: Weinmann, Martin, Dipl.-Ing. (FH), 88339 Bad Waldsee (DE)
(74) Vertreter: Hofmann, Gerhard, Dipl.-Ing. Patentassessor

(57) **Zusammenfassung**

Es wird eine Vorrichtung zur Erfassung der Drehstellung, Drehzahl und/oder Drehrichtung des Rotors eines insbesondere elektronisch kommutierten Elektromotors, mit mindestens zwei in Drehrichtung (a) des Rotors (5) versetzt angeordneten Drehstellungssensoren (1,2,3) mit definierten Schaltzuständen, deren Ausgänge (6,7,8) mit einer Auswerteschaltung (14) verbunden sind, vorgeschlagen, wobei zur Verringerung des Verdrahtungs- und damit des Montageaufwandes die Ausgänge (6,7,8) der Drehstellungssensoren (1,2,3) mit der Auswerteschaltung (14) über eine gemeinsame Verbindungsleitung (16) verbunden sind und die Drehstellungssensoren (1,2,3) mit Mitteln (17,18,19) zum Beeinflussen der von den Drehstellungssensoren (1,2,3) abgegebenen Drehstellungssignale versehen sind, derart, daß die Summe dieser Signale in Abhängigkeit vom Schaltzustand der Drehstellungssensoren (1,2,3) keine Mehrdeutigkeiten aufweist.

## Beschreibung

Die Erfindung betrifft eine Vorrichtung zur Erfassung der Drehstellung, Drehzahl und/oder Drehrichtung des Rotors eines Elektromotors, insbesondere eines elektronisch kommutierten Elektromotors, nach dem Oberbegriff von Anspruch 1.

Es sind bereits elektronisch kommutierte Elektromotoren, wie elektronisch kommutierte Gleichstrommotoren, mit einer Vorrichtung zur Erfassung der Drehstellung, Drehzahl und/oder Drehrichtung des Rotors bekannt, bei denen ortsfest am Stator mindestens ein magnetosensitiver Sensor angebracht ist und die Sensoren bei Rotoren mit Permanentmagneten direkt durch den sich aufgrund der Rotordrehung verändernden magnetischen Fluß des Permanentmagneten geschaltet werden.

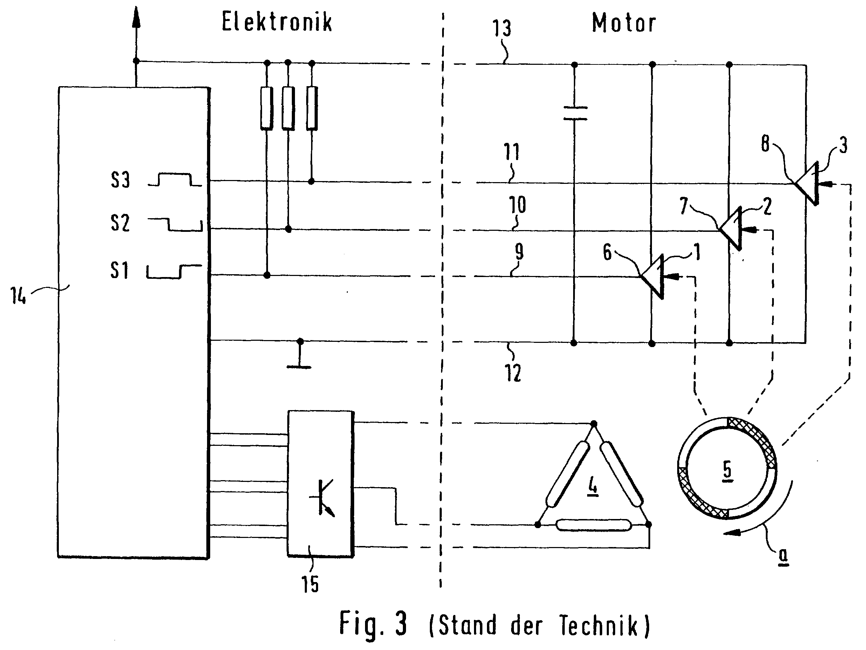

So sind beispielsweise aus der Praxis gemäß Fig. 3 drei magnetosensitive Sensoren 1, 2, 3 als Signalgeber für die elektronische Kommutierung des Gleichstrommotors vorgesehen. Die Sensoren 1, 2, 3 sind jeweils ortsfest am Stator 4 des Gleichstrommotors angebracht. Die Sensoren 1, 2, 3 erzeugen Drehstellungssignale S1, S2, S3, und ihre Ausgänge 6, 7, 8 sind jeweils über eine entsprechende Verbindungsleitung 9, 10, 11 mit einer Auswerteschaltung bzw. Steuerelektronik 14 verbunden. Neben den drei Verbindungsleitungen 9, 10, 11 sind ferner zwei Versorgungsleitungen 12, 13 erforderlich, über die die Sensoren 1, 2, 3 mit einer Spannungsquelle verbunden sind.

Durch die Lage der Sensoren 1, 2, 3 am Stator 4 und die Drehrichtung des Rotors 5 wird die Schaltsequenz der Sensoren 1, 2, 3 bestimmt. Der aktuelle Schaltzustand der Sensoren 1, 2, 3 wird durch die aktuelle Drehstellung des Rotors 5 und die Schaltfrequenz der Sensoren 1, 2, 3 wird durch die Drehzahl des Rotors 5 bestimmt. Die Auswerteschaltung 14, zum Beispiel ein Mikrocontroller, steuert die elektronische Kommutierung des Gleichstrommotors über eine Leistungsstufe 15 in Abhängigkeit von den Schaltzuständen der Sensoren 1, 2, 3, d.h. genauer in Abhängigkeit von den Drehstellungssignalen S1, S2, S3.

Nachteilig bei dieser herkömmlichen Vorrichtung zur Drehstellungs-, Drehzahl- und/oder Drehrichtungserfassung des Rotors ist der relativ hohe Verdrahtungsaufwand mit den Versorgungsleitungen 12, 13 und Verbindungsleitungen 9, 10, 11 der Sensoren 1, 2, 3.

Zur Verringerung des Verdrahtungs- und damit auch des Montageaufwandes wird in der DE-A1 195 27 982 ein elektronisch kommutierter Elektromotor vorgeschlagen, bei dem die Sensorsignale über die Versorgungsleitungen der Sensoren übertragen werden, so daß auf die Verbindungsleitungen der Sensorausgänge mit der Auswerteschaltung verzichtet werden kann. Um zu verhindern, daß der Betriebsstrom der Sensoren die Messung der Drehstellungserkennung des Rotors beeinflußt, muß der A/D-Wandler auf den Stromverbrauch der Sensoren abgeglichen werden, wobei der Stromverbrauch der Sensoren von vielen Parametern wie Exemplartrennung, Betriebsspannung sowie Temperatur abhängt.

Ausgehend von dem genannten Stand der Technik ist es eine Aufgabe der vorliegenden Erfindung, den Verdrahtungsaufwand einer Vorrichtung zur Erfassung der Drehstellung, Drehzahl und/oder Drehrichtung des Rotors eines Elektromotors zu reduzieren und dabei gleichzeitig die oben beim Stand der Technik aufgeführten Nachteile zu vermeiden.

Diese Aufgabe wird durch die Vorrichtung mit den Merkmalen von Anspruch 1 gelöst. Dadurch, daß die Drehstellungssignale mehrerer bzw. aller Sensoren über gemeinsame Verbindungsleitungen der Auswerteschaltung zugeführt werden, wird die Anzahl der benötigten Verbindungsleitungen und damit der Verdrahtungsaufwand der Vorrichtung deutlich vermindert. Ferner werden bei der erfindungsgemäßen Vorrichtung die Drehstellungssignale nicht vom Betriebsstrom der Sensoren überlagert bzw. beeinflußt und die Betriebsspannung der Sensoren ist unabhängig von deren Schaltzustand, da die Versorgungsleitungen ausschließlich zur Spannungsversorgung der Sensoren verwendet werden. Damit kann die Betriebsspannung für die Sensoren über eine Kapazität entkoppelt werden, ohne Einfluß auf den Signalverlauf. Um eine eindeutige Auswertung der Drehstellungssignale durch die Auswerteschaltung zu ermöglichen, sind die Drehstellungssensoren mit Mitteln zum Beeinflussen der von den Sensoren abgegebenen Drehstellungssignale versehen, derart, daß die Summe dieser Signale in Abhängigkeit vom Phasenwinkel des Rotors keine Mehrdeutigkeiten aufweist. Auf diese Weise werden die auf den Verbindungsleitungen gemeinsam übertragenen Drehstellungssignale in Abhängigkeit von dem betreffenden Drehstellungssensor unterschiedlich beeinflußt bzw gekennzeichnet.

Vorzugsweise werden als Mittel zum Beeinflussen der von den Sensoren abgegebenen Drehstellungssignale elektrische Widerstände mit unterschiedlichen Widerstandswerten verwendet, so daß die von den Drehstellungssensoren abgegebenen Drehstellungssignale mit unterschiedlichen Amplituden über die gemeinsamen Verbindungsleitungen der Auswerteschaltung zugeführt werden.

Weitere Ausgestaltungen und Weiterbildungen der vorliegenden Erfindung sind Gegenstand weiterer Unteransprüche.

Die Erfindung wird im folgenden anhand eines bevorzugten Ausführungsbeispieles unter Bezugnahme auf die beiliegende Zeichnung näher erläutert. Darin zeigen:
- Fig. 1: eine schematische Darstellung einer Vorrichtung zur Erfassung der Drehstellung, Drehzahl und/oder Drehrichtung des Rotors eines Elektromotors gemäß der vorliegenden Erfindung;
- Fig. 2: schematische Diagramme der an den Ausgängen der Drehstellungssignale anliegenden Drehstellungssignale und der mittels der gemeinsamen Verbindungsleitungen übertragenen überlagerten Drehstellungssignale und
- Fig. 3: eine schematische Darstellung einer herkömmlichen Vorrichtung zur Lage-, Drehzahl- und/oder Drehrichtungserfassung des Rotors eines Elektromotors.

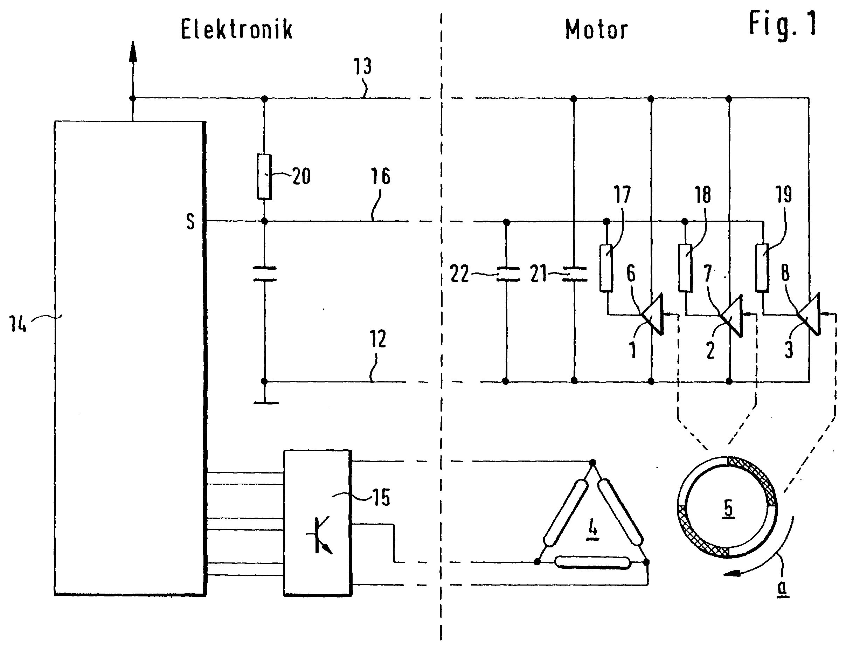

In Fig. 1 ist schematisch die Schaltung eines elektronisch kommutierten Elektromotors, insbesondere eines elektronisch kommutierten Gleichstrommotors mit Permanentmagnet-Rotor, sowie dessen elektronische Steuerung gezeigt. Für gleiche Elemente werden die gleichen Bezugszeichen verwendet wie in der oben zum Stand der Technik beschriebenen Fig. 3.

Der in der rechten Hälfte von Fig. 1 dargestellte Elektromotor weist einen Rotor 5 mit Permanentmagnet und einen Stator 4 auf. Am Stator 4 sind beispielhaft drei Drehstellungssensoren 1, 2, 3 ortsfest, in Drehrichtung a des Rotors versetzt zueinander, angebracht, die parallel zueinander geschaltet sind. Als Sensoren 1, 2, 3 können vorzugsweise magnetosensitive Sensoren, wie Hall-Sensoren, mit open collector oder push/pull Ausgang eingesetzt werden. Die Sensoren 1, 2, 3 werden in diesem Fall durch den sich aufgrund der Rotordrehung verändernden magnetischen Fluß des Permanentmagneten geschaltet. Es können aber ebenso Sensoren 1, 2, 3 anderer Art verwendet werden, wie zum Beispiel optische oder optoelektronische Sensoren. Zur Spannungsversorgung sind die Sensoren 1, 2, 3 über zwei Versorgungsleitungen 12, 13 mit einer (nicht dargestellten) Spannungsquelle verbunden.

Die Signalausgänge 6, 7, 8 der Drehstellungssensoren 1, 2, 3 sind nicht, wie beim Stand der Technik gemäß Fig. 3, über separate Verbindungsleitungen 9, 10, 11 mit der Auswerteschaltung 14 verbunden, sondern die an den Ausgängen 6, 7, 8 der drei Drehstellungssensoren 1, 2, 3 anliegenden Drehstellungssignale werden über eine gemeinsame Verbindungsleitung 16 der Auswerteschaltung bzw. Steuerelektronik 14, beispielsweise einem Microcontroller, zugeführt.

Um eine eindeutige Auswertung der gemeinsam übertragenen Drehstellungssignale S durch die Auswerteschaltung 14 zu ermöglichen, sind zwischen die Signalausgänge 6, 7, 8 der Drehstellungssensoren 1, 2, 3 und die gemeinsame Verbindungsleitung 16 Mittel 17, 18, 19 zum unterschiedlichen Beeinflussen der von den Drehstellungssensoren 1, 2, 3 abgegebenen Drehstellungssignale S1, S2, S3 geschaltet. Als Mittel 17, 18, 19 werden im einfachsten Fall, wie im Ausführungsbeispiel von Fig. 1 dargestellt, elektrische Widerstände verwendet, die unterschiedliche Widerstandswerte aufweisen, so daß die von den Drehstellungssensoren 1, 2, 3 abgegebenen Drehstellungssignale S1, S2, S3 mit unterschiedlichen Amplituden über die gemeinsame Verbindungsleitung 16 übertragen werden. Die Auswerteschaltung 14 muß in diesem Fall derart beschaffen sein, daß die Amplituden des überlagerten Drehstellungssignales S aufgelöst werden können. Anstelle der in Fig. 1 gezeigten elektrischen Widerstände sind für den Fachmann auch beliebige andere Mittel 17, 18, 19 zur Signalbeeinflussung, wie beispielsweise Modulatoren Multiplexer, zu denen die Auswerteschaltung 14 entsprechende Demodulatoren oder Demultiplexer aufweist.

Im Ausführungsbeispiel von Fig. 1 ist ferner zwischen der Versorgungsleitung 13 und die gemeinsame Verbindungsleitung 16 ein elektrischer Widerstand 20 geschaltet. Zusammen mit diesem Widerstand 20 bilden die Widerstände 17, 18, 19 einen Spannungsteiler, der je nach Schaltzustand der Sensoren 1, 2, 3 einen unterschiedlichen Wert aufweist. Die gemeinsame Verbindungsleitung 16 entspricht dabei dem Mittelabgriff dieses Spannungsteilers und wird einem A/D-Wandler zur Umwandlung des Spannungssignales in einen Binär- oder Decimalcode in der Auswerteschaltung 14 zugeführt.

Die Auswerteschaltung 14 fragt fortlaufend den Spannungsteiler, d.h. das Ausgangssignal des A/D-Wandlers ab und bestimmt daraus die aktuelle Drehstellung, die aktuelle Drehzahl und/oder die aktuelle Drehrichtung des Rotors 5. Die Widerstandswerte der als Mittel zur Signalbeeinflussung dienenden elektrischen Widerstände 17, 18, 19 des Spannungsteilers sind dabei derart zu wählen, daß sich für den A/D-Wandler der Auswerteschaltung 14 eine hinreichende Auflösung ergibt. In dem gezeigten Ausführungsbeispiel mit drei Sensoren 1, 2, 3 ist beispielsweise eine Auflösung von größer 10% möglich, so daß die Herstellung der Vorrichtung mit relativ billigen Bauteilen ohne Abgleich auf ihre Bauteiltoleranzen möglich ist.

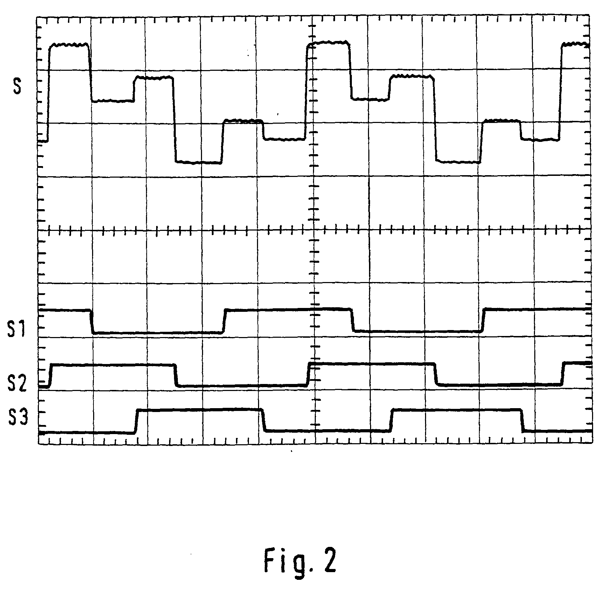

In Fig. 2 ist beispielhaft der prinzipielle Verlauf der Schaltzustände der Drehstellsignale S1, S2, S3 der drei Drehstellungssensoren 1, 2, 3 an den Signalausgängen 6, 7, 8 dargestellt. Die Drehstellungssensoren sind Hallsensoren mit open collector Ausgängen, d.h. low Potential bedeutet, daß der Signalausgang mit der Versorgungsleitung 12 verbunden ist und high Potential bedeutet, daß der Signalausgang hochohmig ist. Die Drehstellungssensoren 1, 2, 3 sind symmetrisch am Stator in Drehrichtung a des Rotors mit dem Winkelversatz 120°/p angeordnet, wobei p die Polpaarzahl der Magnetpoole des Rotors bedeutet. Die Drehzahl des Rotors ergibt sich z.B. aus der Schaltfrequenz eines Drehgebersignals geteilt durch die Polpaarzahl. Die Rotorstellung kann aus den 6 möglichen Schaltzuständen der Drehstellungssensoren abgeleitet werden. Die Drehrichtung ergibt sich aus der Schaltsequenz der Schaltzustände der Drehstellungssensoren.

Des weiteren ist in Fig. 2 synchron zu den Schaltzuständen der Drehstellungssensoren der Amplitudenverlauf des Drehstellungssignals S der gemeinsamen Verbindungsleitung 16 oszillographiert. Als Mittel zur Beeinflussung der von den Drehstellungssensoren 1,2,3 abgegebenen Drehstellungssignale S1, S2, S3, sind Widerstände mit der Dimensionierung R17 = 2*R20, R18 = R20, und R19 = 4,5 * R20 geschalten. Die Rotorstellung kann aus den 6 unterschiedlichen Amplituden des Drehstellungssignals S an der gemeinsamen Verbindungsleitung 16 abgeleitet werden. Die Drehzahl des Rotors ergibt sich z.B. aus der Wiederholfrequenz gleicher Amplituden des Drehstellungssignals S auf der gemeinsamen Verbindungsleitung 16 geteilt durch die Polpaarzahl. Die Drehrichtung ergibt sich aus der Sequenz unterschiedlicher Amplituden des Drehstellungssignals S auf der gemeinsamen Verbindungsleitung 16.

Weiter ist der A/D-Wandler der Auswerteschaltung bzw. Steuerelektronik 14 vorteilhafterweise mit derselben Spannungsversorgung verbunden wie die Drehstellungssensoren 1, 2, 3. Durch diese Maßnahme kann der Einfluß von Schwankungen der Versorgungsspannung auf die Auswertung des Drehstellungssignales S und damit auf die Erfassung der Drehstellung des Rotors 5 eliminiert werden.

Wie bei herkömmlichen Vorrichtungen steuert die Auswerteschaltung 14 die elektronische Kommutierung des Gleichstrommotors über eine Leistungsstufe 15 in Abhängigkeit von den Schaltzuständen der Drehstellungssensoren 1, 2, 3, d.h. genauer in Abhängigkeit von dem gemeinsamen Drehstellungssignal S. Dabei wird durch die Lage der Sensoren 1, 2, 3 am Stator 4 und die Drehrichtung des Rotors 5 die Schaltsequenz der Sensoren 1, 2, 3, durch die aktuelle Drehstellung des Rotors 5 der aktuelle Schaltzustand der Sensoren 1, 2, 3 und durch die Drehzahl des Rotors 5 die Schaltfrequenz der Sensoren 1, 2, 3 bestimmt.

Zum Schutz vor elektromagnetischen Störimpulsen, die zu Fehlfunktionen bzw. zur Zerstörung der Drehstellungssensoren 1, 2, 3 führen könnten, sind die Versorgungsleitungen 12, 13 der Sensoren 1, 2, 3 innerhalb des Motors direkt an den Sensoren 1, 2, 3 mit einer Kapazität 21 entkoppelt. Ebenso kann die gemeinsame Verbindungsleitung 16 direkt an den Sensoren 1, 2, 3 mit einer weiteren Kapazität 22 entkoppelt werden.

Die erfindungsgemäße Ausgestaltung der Vorrichtung zur Drehstellungs-, Drehzahl- und/oder Drehrichtungserfassung des Rotors reduziert den Verdrahtungsaufwand und damit auch den Montageaufwand erheblich, ohne daß gegenüber der herkömmlichen Vorrichtung gemäß Fig. 3 ein zusätzlicher Aufwand für den Abgleich bauteilbedingter Toleranzen oder teurere Präzissionsbauteile notwendig waren. Ferner ist das gemeinsame Drehstellungssignal S unabhängig von den Betriebsströmen der Sensoren 1, 2, 3 und die Betriebsspannung der Sensoren 1, 2, 3 ist unabhängig von deren Schaltzustand.

Die vorliegende Erfindung ist nicht auf Elektromotoren mit drei Drehstellungssensoren 1, 2, 3 und einer gemeinsamen Verbindungsleitung 16 beschränkt. Vielmehr kann die Anzahl der Verbindungsleitungen bereits ab zwei Sensoren reduziert werden, und die Auflösung der Signale kann bei einer größeren Anzahl von Sensoren durch mehrere Verbindungsleitungen erhöht werden, die jeweils für mindestens zwei Sensoren als gemeinsame Verbindungsleitung vorgesehen sind.

## Patentansprüche

1. Vorrichtung zur Erfassung der Drehstellung, Drehzahl und/oder Drehrichtung des Rotors eines Elektromotors, mit mindestens zwei in Drehrichtung (a) des Rotors (5) versetzt angeordneten Drehstellungssensoren (1, 2, 3), deren Ausgänge (6, 7, 8) mit einer Auswerteschaltung (14) verbunden sind,
**dadurch gekennzeichnet,**
daß die Ausgänge (6, 7, 8) der Drehstellungssensoren (1, 2, 3) mit der Auswerteschaltung (14) über gemeinsame Verbindungsleitungen (16) verbunden sind, und daß die Drehstellungssensoren (1, 2, 3) mit Mitteln (17, 18, 19) zum Beeinflussen der von den Drehstellungssensoren (1, 2, 3) abgegebenen Drehstellungssignale versehen sind, derart, daß die Summe dieser Signale in Abhängigkeit vom Phasenwinkel des Rotors (5) keine Mehrdeutigkeiten aufweist.

2. Vorrichtung nach Anspruch 1,
**dadurch gekennzeichnet,**
daß die Mittel (17, 18, 19) zum Beeinflussen der Drehstellungssignale elektrische Widerstände mit unterschiedlichen Widerstandswerten sind.

3. Vorrichtung nach einem der vorhergehenden Ansprüche,
**dadurch gekennzeichnet,**
daß die Auswerteschaltung (14) einen A/D-Wandler zur Umwandlung der Drehstellungssignale der Verbindungsleitung (16) aufweist.

4. Vorrichtung nach Anspruch 3,
**dadurch gekennzeichnet,**
daß der A/D-Wandler mit derselben Spannungsversorgung verbunden ist wie die Sensoren (1, 2, 3).

5. Vorrichtung nach einem der vorhergehenden Ansprüche,
**dadurch gekennzeichnet,**
daß zwischen die Versorgungsleitungen (12, 13) der Drehstellungssensoren (1, 2, 3) eine Kapazität (21) geschaltet ist.

6. Vorrichtung nach einem der vorhergehenden Ansprüche,
**dadurch gekennzeichnet,**
daß zwischen die gemeinsamen Verbindungsleitungen (16) und eine der Versorgungsleitungen (12, 13) der Drehstellungssensoren (1, 2, 3) eine Kapazität (22) geschaltet ist.

7. Vorrichtung nach einem der vorhergehenden Ansprüche,
**dadurch gekennzeichnet,**
daß die Drehstellungssensoren (1, 2, 3) magnetosensitive Sensoren sind.
